# EUROPÄISCHE PATENTANMELDUNG

(11) **EP 2 517 582 A2**
(43) Veröffentlichungstag der Anmeldung: **31.10.2012**
(21) Anmeldenummer: 12162840.8
(22) Anmeldetag: 02.04.2012
(51) Int. Cl.: A24C 5/32

(54) **Saugring für eine Fördertrommel der Tabak verarbeitenden Industrie**

(30) Priorität: 27.04.2011 DE 102011017581
(71) Anmelder: HAUNI Maschinenbau AG, 21033 Hamburg (DE)
(72) Erfinder: Grassmel, Ralf, 21635 Jork (DE)
(74) Vertreter: Seemann, Ralph

(57) **Zusammenfassung**

Die Erfindung betrifft einen Saugring (50) für eine Fördertrommel (30) der Tabak verarbeitenden Industrie. Hierzu ist der Saugring (50) als Ringkörper (52) ausgebildet, wobei im Ringkörper (52) wenigstens ein teilkreisförmiger Kanal (60.A bis 60.L) oder ein kreisförmiger Kanal (60.A bis 60.L) in Umfangsrichtung ausgebildet ist, wobei der teilkreisförmige oder kreisförmige Kanal (60.A bis 60.L) mehrere, vorzugsweise zwei, Kanalöffnungen im Ringkörper (52) aufweist, wobei die Kanalöffnungen über den teilkreisförmigen oder den kreisförmigen Kanal (60.A bis 60.L) miteinander kommunizierend verbunden sind, so dass bei Beaufschlagung einer Kanalöffnung mit Unterdruck oder mit Überdruck die mit der beaufschlagten Kanalöffnung kommunizierende Kanalöffnung des teilkreisförmigen oder kreisförmigen Kanals (60.A bis 60.L) mit Unterdruck oder Überdruck beaufschlagt ist.

Außerdem betrifft die Erfindung einen Saugkopf (70) für einen Saugring (50) einer Fördertrommel der Tabak verarbeitenden Industrie sowie eine Anordnung eines Saugrings (50). Ferner betrifft die Erfindung ein Verfahren zum Betreiben einer Fördertrommel (30) der Tabak verarbeitenden Industrie und eine Maschine der Tabak verarbeitenden Industrie, insbesondere Filteransetzmaschine.

## Beschreibung

Die Erfindung betrifft einen Saugring für eine Fördertrommel der Tabak verarbeitenden Industrie sowie einen Saugkopf für einen Saugring einer Fördertrommel der Tabak verarbeitenden Industrie. Außerdem betrifft die Erfindung eine Anordnung eines Saugrings. Ferner betrifft die Erfindung ein Verfahren zum Betreiben einer Fördertrommel der Tabak verarbeitenden Industrie und eine Maschine der Tabak verarbeitenden Industrie, insbesondere Filteransetzmaschine.

Unter der Bezeichnung "MAX" ist eine Filteransetzmaschine der HAUNI Maschinenbau AG, Hamburg, bekannt.

Als Filteransetzmaschine wird eine Vorrichtung bzw. Maschine zur Herstellung von Filterzigaretten verstanden mit Mitteln zur Aufnahme von Tabakstöcken doppelter Länge mit Mitteln zum Schneiden dieser doppeltlangen Tabakstöcke in Tabakstöcke einfacher Länge, mit Mitteln zum Einbringen von Filterstopfen doppelter Länge zwischen die Tabakstöcke einfacher Länge, mit Mitteln zum Verbinden des doppeltlangen Filterstopfens mit den beiden Tabakstöcken einfacher Länge durch Umhüllen mit einem als Verbindungsblättchen ausgebildeten Belagpapierblättchen, das mittels einer Schneideinrichtung von einem zugeführten Belagpapierstreifen abgetrennt wird, mit Mitteln zum nachfolgenden Ausführen eines Trennschnitts durch den doppeltlangen Filterstopfen, so dass Filterzigaretten normaler Gebrauchslänge entstehen.

Auf Fördertrommeln einer Filteransetzmaschine werden stabförmige Artikel der Tabak verarbeitenden Industrie, insbesondere Filterstäbe und/oder Filterzigaretten und/oder Tabakstöcke, transportiert, wobei die stabförmigen Artikel in einer oder mehreren Reihen hintereinander angeordnet werden und in queraxialer Richtung gefördert werden. Diese Fördertrommeln werden üblicherweise im Zuge der Konfektionierung von Filterstäben und von Filterzigaretten eingesetzt, wobei Filterstabkomponenten mehrfacher Gebrauchslänge in einem so genannten Querverfahren, d.h. quer zu ihren Längsachsen, durch einmalige oder mehrmalige Unterteilung, Staffelung und Hintereinanderreihung für ihre nachfolgende Verbindung mit weiteren Filterkomponenten oder Rauchartikelkomponenten vorbereitet werden.

Außerdem sind als Fördertrommeln der Tabak verarbeitenden Industrie sogenannte Spreiztrommeln bekannt, wobei nach einem Trennschnitt durch einen stabförmigen Artikel diese geschnittenen Artikel auf einer Spreiztrommel in längsaxialer Richtung voneinander beabstandet bzw. längsaxial auseinander gezogen werden, so dass im Abgabepunkt der Spreiztrommel die Artikelpaare mit einem vorbestimmten längsaxialen Abstand zwischen den Kopfenden an die nachfolgende Fördertrommel abgegeben werden.

Ferner ist bekannt, dass beispielsweise während der Herstellung von Filterzigaretten an einer Filteransetzmaschine aufgrund der Handhabung bzw. der Manipulation der Filterzigaretten unerwünschte Mengen an Tabakstaub oder Kurztabakteilchen entstehen, die sich in der Maschine anlagern und beispielweise Saugbohrungen von Saugförderern zusetzen können. Aus DE 103 17 770 A1 ist beispielsweise ein Verfahren zum Reinigen einer Zigarettenherstellmaschine beschrieben, wobei die Maschine für die Durchführung der Reinigung stillgesetzt ist.

Bei der Herstellung von Zigaretten, insbesondere Filterzigaretten, werden im Bereich der Filter Nebenluftkanäle in Form von Löchern oder Perforationslöchern eingebracht, durch die beim Ziehen an den Zigaretten dem Rauch Nebenluft zugeführt wird. Hierzu werden beispielsweise Zigaretten mittels Laserstrahlen perforiert, wobei jeweils eine bestimmte Anzahl von Löchern mit einem gewünschten Gesamtquerschnitt aufgebracht wird

Es wird dabei angestrebt, einen definierten Nebenluftstrom zuzuführen, der in einem vorgegebenen, möglichst konstanten Verhältnis zu dem die Zigaretten verlassenden Gesamtstrom stehen soll. Dieses Verhältnis wird mit Gesamtventilationsgrad bezeichnet. Es ist bereits bekannt, Zigaretten mit Löchern zu versehen, d. h. sie zu perforieren, z. B. durch Entlangrollen an einer mit Nadeln besetzten Rollfläche.

Bei der Konfektionierung von Zigaretten an einer Filteransetzmaschine wird bei den hergestellten Filterzigaretten unter Verwendung einer Perforationseinrichtung eine Perforation aus Löchern in das Hüllmaterial oder die Umhüllungsstreifen der stabförmigen Artikel eingebracht, wobei die Zigaretten für bzw. während der Perforation auf eine Perforationstrommel gefördert werden.

In DE 27 50 038 C2 ist beispielsweise ein Verfahren zum Steuern des Perforierens von Zigaretten oder anderen stabförmigen Rauchartikeln beschrieben. Zur Kompensation der Tabakstockventilation wird vorgeschlagen, die Luftdurchlässigkeit des Zigarettenpapiers vor der Strangbildung oder auf einer separaten Prüftrommel vor der Perforierung zu messen.

Weiterhin ist in DE 41 06 127 A1 ein Verfahren zum Perforieren von Hüllmaterial stabförmiger Artikel der Tabak verarbeitenden Industrie offenbart, bei dem das zu perforierende Hüllmaterial durch eine Perforationszone bewegt wird und ein entsprechender gepulster energiereicher Strahl in der Perforationszone auf das Hüllmaterial ausgerichtet wird, um Perforationslöcher auf dem Hüllmaterial auszubilden.

Ferner ist in EP 0 910 962 B1 eine Filterherstellungsmaschine für ventilierte Tabakprodukte offenbart, wobei die Filterherstellungsmaschine eine Perforierungseinrichtung an einer Trommel aufweist. Die Perforierungseinrichtung steht mit einer am Umfang einer Abzugseinrichtung der Trommel befindlichen Abzugseinrichtung in Verbindung, um durch Ansaugen den bei der Perforation entstehenden Rauch und Staub abzuziehen.

Ausgehend von diesem Stand der Technik besteht die Aufgabe der Erfindung darin, bei einer Fördertrommel der Tabak verarbeitenden Industrie die Absaugung von Partikeln im Bereich der Fördertrommel zu ermöglichen, wobei insbesondere eine effektive Absaugung auch in schwer zugänglichen Förderbereichen einer Fördertrommel ermöglicht werden soll.

Gelöst wird diese Aufgabe durch einen Saugring für eine Fördertrommel der Tabak verarbeitenden Industrie, wobei der Saugring als Ringkörper ausgebildet ist, wobei im Ringkörper wenigstens ein teilkreisförmiger Kanal oder ein kreisförmiger Kanal in Umfangsrichtung des Ringkörpers ausgebildet ist, wobei der teilkreisförmige oder kreisförmige Kanal mehrere, vorzugsweise zwei, Kanalöffnungen im Ringkörper aufweist, wobei die Kanalöffnungen über den teilkreisförmigen Kanal miteinander kommunizierend verbunden sind, so dass bei Beaufschlagung einer Kanalöffnung des Kanals mit Unterdruck oder Überdruck die mit der beaufschlagten Kanalöffnung kommunizierende Kanalöffnung des teilkreisförmigen oder kreisförmigen Kanals mit Unterdruck oder mit Überdruck beaufschlagt ist.

Der Erfindung beruht auf dem Gedanken, dass ein Saugring an einer Fördertrommel der Tabak verarbeitenden Industrie angeordnet ist, wobei der Saugring miteinander kommunizierende Kanalöffnungen aufweist, wobei die kommunizierenden Kanalöffnungen über einen im Ringkörper ausgebildeten Kanal miteinander verbunden sind. Dadurch ist es beim bestimmungsgemäßen Einsatz an einer Fördertrommel möglich, dass eine Unterdruckquelle oder Überdruckquelle zur Beaufschlagung des Kanals im Ringkörper an einer Position wirksam ist, die von der Position der von der Saugquelle oder Überdruckquelle entfernten Kanalöffnung einen Überdruck oder Unterdruck bewirkt, wobei die Kanalöffnung an der Außenseite des Ringkörpers ausgebildet ist.

Unter Rotation des Saugrings wird bei Vorbeiförderung einer Kanalöffnung an einer am Saugring oder benachbart zum Saugring angeordneten und mit dem Saugring zusammenwirkenden Unterdruckquelle oder Überdruckquelle an der von der Überdruckquelle oder Unterdruckquelle entfernten außenseitigen oder äußeren Kanalöffnung ein entsprechender Unterdruck oder Überdruck angelegt. Wird die mit Unterdruck beaufschlagte Kanalöffnung an der Unterdruckquelle oder Überdruckquelle vorbeibewegt, wird während der Bewegung bzw. der Förderung der mit einem Saugring ausgebildeten Fördertrommel ein Unterdruck oder Überdruck an der entfernten Kanalöffnung des Saugrings angelegt, wobei der Unterdruck oder Überdruck abgeschaltet ist, sobald die entsprechende kommunizierende Kanalöffnung, die an der Unterdruckquelle oder Überdruckquelle vorbeigefördert oder vorbeibewegt wird, außerhalb des von der Unterdruckquelle oder Überdruckquelle wirksamen Bereiches bewegt wird.

Dadurch ist es beispielsweise möglich, über die am Umfang des Saugrings ausgebildeten Kanalöffnungen und über den im Inneren des Ringkörpers ausgebildeten Kanal Partikel an einer Fördertrommel abzusaugen, bei der die Saugluftführung innerhalb der mit dem Saugring ausgebildeten Trommel im Saugring verläuft und eine Absaugeinrichtung diametral zur Position oder dem Förderbereich, in dem Partikel an der Fördertrommel abgesaugt werden sollen, am Umfang der Fördertrommel positioniert ist.

Darüber hinaus ist in einer Ausgestaltung des Saugrings vorgesehen, dass im Ringkörper mehrere, vorzugsweise nebeneinander und/oder parallel angeordnete, teilkreisförmige oder kreisförmige Kanäle in Umfangsrichtung des Saugrings ausgebildet sind, wobei die teilkreisförmigen oder kreisförmigen Kanäle jeweils mehrere, vorzugsweise zwei, Kanalöffnungen im Ringkörper aufweisen, wobei die Kanalöffnungen jedes Kanals über den jeweiligen teilkreisförmigen Kanal miteinander kommunizierend verbunden sind, so dass bei Beaufschlagung einer Kanalöffnung des jeweiligen Kanals mit Unterdruck oder mit Überdruck die mit der beaufschlagten Kanalöffnung eines Kanals kommunizierende Kanalöffnung des jeweiligen teilkreisförmigen oder kreisförmigen Kanals mit Unterdruck oder mit Überdruck beaufschlagt ist.

Dadurch, dass mehrere mit Unterdruck beaufschlagbare ringförmige Kanäle im Ringkörper nebeneinander angeordnet sind, ist es möglich, einen Saugsektor an dem Saugring mit Unterdruck zu beaufschlagen, wobei die Unterdruckquelle, die benachbart zum Saugring angeordnet ist und die an der Unterdruckquelle vorbeigeförderten Kanalöffnungen mit Unterdruck beaufschlagt, an einer vom Saugsektor abgewandten Position am Saugring angeordnet ist.

Darüber hinaus ist in einer Ausgestaltung des Saugrings vorgesehen, dass die Kanäle in Kanalbohrungen münden, wobei insbesondere die Kanalbohrungen parallel zur Mittenachse des Ringkörpers angeordnet sind. Dadurch ist es möglich, dass die Kanalbohrungen gegenüber den im Ringkörper ausgebildeten ringförmigen Kanälen verbreitert ausgebildet sind, wodurch über die gesamte Breite des Saugrings bzw. über die Länge der Kanalbohrungen ein wirksamer Unterdruck oder Überdruck angelegt werden kann.

Dazu ist weiter vorgesehen, dass die Kanalbohrungen über radiale Anschlussbohrungen mit dem teilkreisförmigen oder breitförmigen Kanal jeweils verbunden sind, wodurch eine Durchleitung des Unterdrucks zwischen dem (teil)kreisförmigen Kanal und den jeweiligen Kanalbohrungen ausgebildet ist, wobei die miteinander kommunizierenden Kanalbohrungen gegenüber dem jeweiligen Kanal verbreitert sind.

Darüber hinaus ist in einer bevorzugten Ausgestaltung des Saugrings vorgesehen, dass die Kanalbohrungen mit der äußeren Mantelfläche des Ringkörpers und/oder mit der inneren Mantelfläche des Ringkörpers jeweils über radiale Durchlassbohrungen für die Kanalbohrungen verbunden sind. Durch die radialen Durchlassbohrungen, die an der Außenseite des Ringkörpers oder an der Innenseite des Ringkörpers ausgebildet sind, werden je nach Betrieb und Beaufschlagung der Durchlassbohrungen mit Unterdruck oder Überdruck ein entsprechender Unterdruck oder Überdruck an der Außenseite des Saugrings ausgebildet. Hierbei sind vorteilhafterweise die Kanalbohrungen über die radialen Anschlussbohrungen mit dem im Inneren des Ringkörpers ausgebildeten Kanals verbunden.

Außerdem zeichnet sich eine Ausgestaltung des Saugrings dadurch aus, dass die kommunizierenden Kanalöffnungen eines Kanals jeweils diametral am Ringkörper ausgebildet sind.

Überdies ist es vorteilhaft, dass die Anschlussbohrungen zwischen den nebeneinander angeordneten teilkreisförmigen oder kreisförmigen Kanälen und den Kanalbohrungen zur Versorgung der Kanalbohrungen um einen vorbestimmten Winkel bezogen auf die Mittenachse des Ringkörpers versetzt angeordnet sind, wodurch insbesondere die Anschlussbohrungen in Umlaufrichtung des Saugrings versetzt und nacheinander in gestaffelter Weise angeordnet sind.

Außerdem ist gemäß einer Ausführungsform vorgesehen, dass der Saugring in oder an einer Fördertrommel der Tabak verarbeitenden Industrie angeordnet ist, wobei insbesondere die Fördertrommel als Prüftrommel oder Spreiztrommel oder als Perforationstrommel ausgebildet ist.

Zur Lösung der Aufgabe ist außerdem ein Saugkopf für einen Saugring einer Fördertrommel der Tabak verarbeitenden Industrie, wie voranstehend beschrieben vorgesehen, wobei der Saugkopf eine konkave teilkreisförmige, d.h. nach innen gewölbte, Formfläche aufweist, wobei die Formfläche an die gekrümmte kreisförmige Außenseite des Saugrings angepasst ist, wobei der Saugkopf wenigstens eine an der Formfläche endende Bohrung, insbesondere Saugbohrung, aufweist, so dass bei Beaufschlagung der wenigstens einen Bohrung des Saugkopfes mit Unterdruck (oder Überdruck) im Zusammenwirken mit den gegenüber der Formfläche des Saugkopfes angeordneten außenseitigen Kanalöffnungen des Saugrings ein Unterdruck (oder ein Überdruck) an den mit den beaufschlagten Kanalöffnungen über einen Kanal des Saugrings kommunizierenden Kanalöffnungen des teilkreisförmigen oder kreisförmigen Kanals mit Unterdruck (oder Überdruck) beaufschlagbar sind.

Dazu ist in einer Ausgestaltung weiter vorgesehen, dass der Saugkopf auf der dem Saugring zugewandten Seite im Kopfbereich quer zur konkaven Wölbung der Formfläche verbreitert ausgebildet ist oder der Saugkopf im Bereich der konkaven teilkreisförmigen Formfläche einen verbreiterten Kopfbereich aufweist und auf der der teilkreisförmigen Formfläche abgewandten Seite sowie auf der dem Saugring abgewandten Seite einen, insbesondere sich in einem Übergangsbereich verjüngenden, Anschlusskörper aufweist, wobei insbesondere im Übergangsbereich der Anschlusskörper wenigstens eine konkave Außenseite und/oder eine polygonartige Einbuchtung in der Außenseite aufweist.

Darüber hinaus wird die Aufgabe gelöst durch eine Anordnung eines Saugrings, wie voranstehend beschrieben, mit einem Saugkopf für den Saugring, wobei der Saugkopf am oder benachbart zum Ringkörper des Saugrings, insbesondere separat, ortsfest angeordnet und gehaltert ist, um bei Beaufschlagung des Saugkopfes mit Unterdruck oder Überdruck die Kanalöffnungen am Ringkörper des Saugrings und die im Inneren des Saugrings ausgebildeten Kanäle mit Unterdruck bzw. Überdruck zu beaufschlagen, wobei insbesondere der Abstand zwischen der teilkreisförmigen Formfläche und der der teilkreisförmigen Formfläche zugewandten Oberfläche des Saugrings weniger als 2 mm, vorzugsweise weniger als 0,2 mm, aufweist.

Während die Anordnung während des Produktionsbetriebs vorzugsweise mit Unterdruck beaufschlagt wird, ist vorgesehen in Produktionspausen und/oder in Reinigungsphasen der Maschine die Anordnung mit Überdruck zu beaufschlagen, um Kanäle und Kanalöffnungen auf Grund der entgegengesetzten (Luft-)Strömung von abgelagerten Partikeln zu befreien, wobei der Überdruck vorzugsweise betragsmäßig größer als der Unterdruck ist.

Dazu ist in einer vorteilhaften Weiterbildung des Saugkopfs vorgesehen, dass der Saugkopf auf der dem Saugring abgewandten Seite im Kopfbereich keilförmig und/oder schaberartig ausgebildet ist, um fehlgeleitete stabförmige Artikel, insbesondere Zigaretten und/oder Doppelzigaretten (schnee-)pflugartig abzuleiten und vom rotierenden Saugring zu entfernen.

Insbesondere werden bei bestimmungsgemäßem Einsatz des Saugrings an oder in einer Fördertrommel unter Rotation der Fördertrommel die Kanalöffnungen am Saugkopf vorbeigefördert, wobei im Zusammenwirken des mit Unterdruck beaufschlagenden Saugkopfes die entsprechenden im Wirkbereich des Saugkopfes vorbeibewegten Kanalbohrungen bzw. Kanalöffnungen mit Unterdruck beaufschlagt werden, um in einem vom Saugkopf abgewandten Bereich am Saugring in einem, vorzugsweise ortsstabilen, Sektor einen Unterdruck an den kommunizierenden und vom Saugkopf entfernten äußeren Kanalöffnungen zu erzeugen.

Außerdem zeichnet sich die Anordnung dadurch aus, dass der Saugkopf in einer alternativen Ausgestaltung eine dem Inneren des Ringkörpers zugewandte bzw. zugeordnete konvexe teilkreisförmige, d.h. nach außen gewölbte, Formfläche aufweist, wobei der Saugkopf radial beabstandet zum Ringkörper, insbesondere separat, gehaltert ist, wobei insbesondere der Abstand zwischen der teilkreisförmigen Formfläche und der der teilkreisförmigen Formfläche zugewandten Oberfläche des Saugrings weniger als 2 mm, vorzugsweise weniger als 0,2 mm, aufweist. Hierbei ist die teilkreisförmige konvexe Formfläche des Saugkopfes an die Krümmung des Ringkörpers im Inneren des Ringkörpers entsprechend angepasst, so dass sich ein im Wesentlichen gleichförmiger Spalt zwischen der Formfläche des Saugkopfes und der Ringkörperoberfläche ausbildet. Der Spalt hat vorzugsweise eine Spaltbreite von weniger als 2 mm, insbesondere weniger als 0,2 mm (, d. h. < 2 mm bzw. 0,2 mm,) und/oder ist sehr viel kleiner als der Durchmesser der stabförmigen Artikel.

In einer alternativen Ausgestaltung der Anordnung ist weiterhin vorgesehen, dass der Saugkopf eine an der Außenseite des Ringkörpers zugeordnete konkave teilkreisförmige, d.h. weiter nach innen gewölbte, Formfläche aufweist, wobei der Saugkopf radial beabstandet zur Außenseite des Ringkörpers, insbesondere separat, gehaltert ist. Dabei ist die Krümmung der Formfläche an die kreisförmige Krümmung der Außenseite des Ringkörpers angepasst, so dass sich ein im Wesentlichen gleichförmiger Spalt mit einer vorbestimmten Spaltbreite zwischen der Formfläche des Saugkopfes und der Ringkörperoberfläche ausbildet.

Vorzugsweise entspricht die, insbesondere wirksame, Breite des Saugkopfes, der an dem Saugring angeordnet ist, der, insbesondere wirksamen, Breite des Ringkörpers.

Ferner zeichnet sich die Anordnung dadurch aus, dass der Saugkopf wenigstens ein oder mehrere, vorzugsweise als Bohrungen ausgebildete, Ansaugkanäle aufweist, die mit Unterdruck beaufschlagbar sind, so dass die Ansaugkanäle mit mehreren nebeneinander angeordneten radialen Durchlassbohrungen des Saugrings für eine Kanalbohrung des Saugrings bzw. einem im Ringkörper des Saugrings verlaufenden Kanal entsprechend zusammenwirken.

Ferner wird die Aufgabe gelöst durch ein Verfahren zum Betreiben einer Fördertrommel der Tabak verarbeitenden Industrie, wobei die Fördertrommel einen voranstehend beschriebenen Saugring aufweist, wobei die Fördertrommel rotierend angetrieben wird, das dadurch weitergebildet ist, dass die Kanalöffnungen am Ringkörper des Saugrings in einem Rotationsbereich des Ringkörpers mit einer Unterdruckquelle verbunden werden, wobei unter Rotation des Ringkörpers die im Rotationsbereich geförderten Kanalöffnungen mit Unterdruck beaufschlagt werden, so dass die mit den an der Unterdruckquelle befindlichen Kanalöffnungen korrespondierenden sowie kommunizierenden Kanalöffnungen des oder der Kanäle im Ringkörper außerhalb des Rotationsbereiches in einem Fördersektor des Saugrings mit Unterdruck beaufschlagt sind.

Durch die Rotation der Fördertrommel und damit des Saugrings werden die Kanalöffnungen und damit die Kanäle des Saugrings umschlagbelastet, d.h. dass die Kanalöffnungen des Ringkörpers des Saugrings im wirksamen Unterdruckbereich der Unterdruckquelle mit Unterdruck beaufschlagt werden, um entsprechend an den mit diesen korrespondierenden und von der Unterdruckquelle abgewandten Kanalöffnungen einen Unterdruck in einem ortsstabilen Saugsektor des Saugrings zu erzeugen. Diese im Saugsektor mit Unterdruck beaufschlagten Kanalöffnungen werden bei Rotation der Fördertrommel anschließend in den Bereich der Unterdruckquelle bewegt und über die Unterdruckquelle mit Unterdruck beaufschlagt, so dass die vorher an der Unterdruckquelle vorbeibewegten Kanalöffnungen nunmehr mit Unterdruck im von der Unterdruckquelle entfernten, insbesondere diametral, angeordneten Saugsektor des Saugrings beaufschlagt sind, um Partikel aus dem ortstabilen Saugsektor am Saugring abzusaugen. Hierdurch werden die Kanalöffnungen des Saugrings und die Kanäle wechselseitig bei Anordnung einer Unterdruckquelle, beispielsweise mittels eines Saugkopfes und eines vorgeordneten Sauggebläses im Wechsel betrieben.

Dazu ist in einer Ausgestaltung des Verfahrens weiterhin vorgesehen, dass die miteinander kommunizierenden Kanalöffnungen der jeweiligen Kanäle des Ringkörpers im Wechsel im Rotationsbereich mit der Unterdruckquelle verbunden werden. Insbesondere umfasst die Unterdruckquelle einen mit Unterdruck beaufschlagten Saugkopf, um einen entsprechenden Unterdruck in den Kanalöffnungen und den Kanälen des Saugrings zu erzeugen.

Darüber hinaus wird die Aufgabe gelöst durch eine Fördertrommel der Tabak verarbeitenden Industrie, insbesondere Perforationstrommel oder Laserperforationstrommel, die einen Saugring aufweist und mit einem Saugkopf zusammenwirkt. Zur Vermeidung von Wiederholungen wird auf die vorangehenden Ausführungen ausdrücklich verwiesen.

Eine weitere Lösung der Aufgabe erfolgt durch eine Maschine der Tabak verarbeitenden Industrie, insbesondere Filteransetzmaschine, die mit einer einen Saugring aufweisenden, Fördertrommel ausgebildet ist. Hierzu wird auf die obigen Ausführungen ebenfalls ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Filteransetzmaschine in einer Vorderansicht,
- Fig. 2a: schematisch eine Ansicht eines Saugrings einer Fördertrommel der Tabak verarbeitenden Industrie,
- Fig. 2b: eine Querschnittsansicht des Saugrings,
- Fig. 2c: eine Außenansicht des Saugrings sowie
- Fig. 3a: schematisch eine Anordnung eines erfindungsgemäßen Saugrings mit einem Saugkopf für den Saugring.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

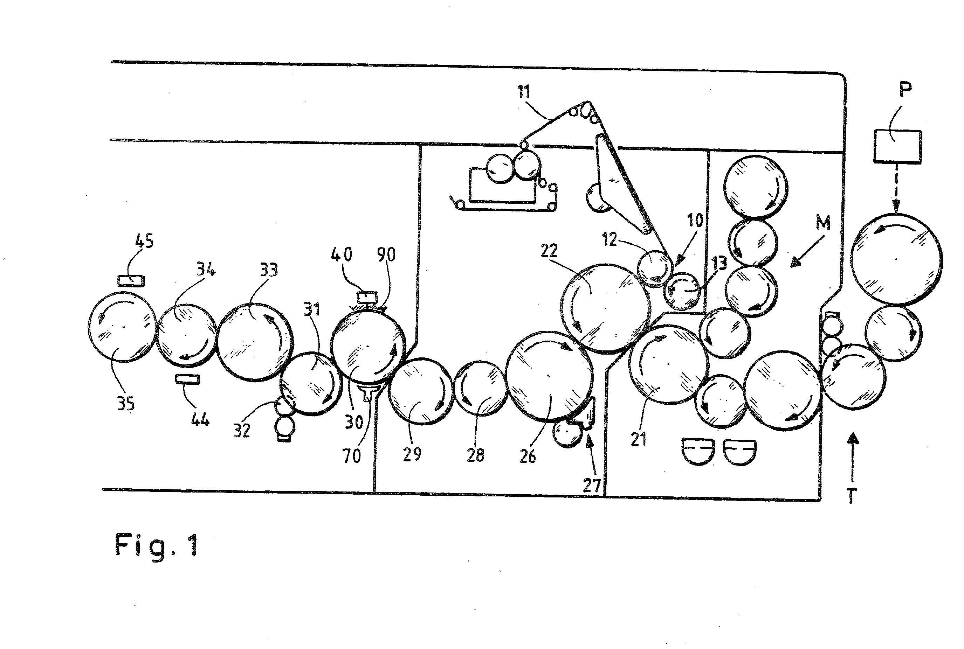

In Fig. 1 ist eine Filteransetzmaschine in einer Vorderansicht ausschnittsweise dargestellt, wobei die Filteransetzmaschine über eine Trommelanordnung T zur Zuführung von Tabakstöcken von einer schematisch eingezeichneten Zigarettenstrangmaschine P Tabakstöcke doppelter Gebrauchslänge empfängt. Eine Zigarettenstrangmaschine ist unter der Bezeichnung "PROTOS" der Patentanmelderin bekannt.

Auf ihrem Förderweg zu einer Zusammenstelltrommel 21 werden die Tabakstöcke doppelter Gebrauchslänge geschnitten und längsaxial gespreizt. Auf der Zusammenstelltrommel 21 werden über eine weitere Trommelanordnung M doppeltlange Filterstopfen transportiert, die jeweils zwischen zwei längsaxial beabstandete Tabakstöcke eingefügt werden. Hierdurch wird auf der Zusammenstelltrommel 21 eine Folge von queraxial hintereinander angeordneten Tabakstock-Filterstopfen-Tabakstock-Gruppen gebildet.

Die zusammengestellten Artikelgruppen werden von der Zusammenstelltrommel 21 an eine Fördertrommel 22 übergeben und zu einem Belagapparat 10 die zusammengestellten Tabakstock-Filterstopfen-Tabakstock-Gruppen transportiert. In DE-C-39 18 137 ist ausführlich ein Belagapparat beschrieben, der vollumfänglich in den Inhalt der vorliegenden Anmeldung aufgenommen wird.

Ein beleimter und geförderter Belagpapierstreifen 11 wird im Belagapparat 10 auf einer Schneidtrommel 12 von den Messern einer Messertrommel 13 in Belagblättchen bzw. Verbindungsblättchen geschnitten. Die geschnittenen Verbindungsblättchen werden jeweils an die Artikelgruppen bzw. Tabakstock-Filterstopfen-Tabakstock-Gruppen auf der Fördertrommel 22 übergeben bzw. angeheftet.

Nach dem Anheften der geschnittenen und der einzelnen Verbindungsblättchen an jeweils eine Artikelgruppe werden die Artikelgruppen weiter zu einer nachfolgenden Rolltrommel 26 und einer Rolleinrichtung 27 transportiert, mittels der die Verbindungsblättchen vollständig um die Tabakstock-Filterstopfen-Tabakstock-Gruppen herumgewickelt werden. Die Rolleinrichtung 27 besteht in einer Ausgestaltung aus einem Stegrad, einer Rollhand mit einer Rollfläche und ausgangsseitig einer Rollwalze, wobei die Rollfläche und die Rolltrommel 26 einen Rollkanal bilden, in dem Artikelgruppen mit den Verbindungsblättchen umwickelt werden, womit doppeltlange Filterzigaretten gebildet werden.

Die doppeltlangen Filterzigaretten werden nachfolgend an eine Fördertrommel 28 und weiter nachfolgend an eine weitere Fördertrommel 29 übergeben und für den weiteren Bearbeitungsprozess an einer Filteransetzmaschine bereitgestellt.

Von der Fördertrommel 29 werden die doppeltlangen Filterzigaretten über eine Fördertrommel 30 zu einer Schneidtrommel 31 gefördert, an der ein Schneidmesser 32 angeordnet ist, welches aus den doppeltlangen Filterzigaretten durch einen mittigen Trennschnitt Filterzigaretten einfacher Gebrauchslänge herstellt.

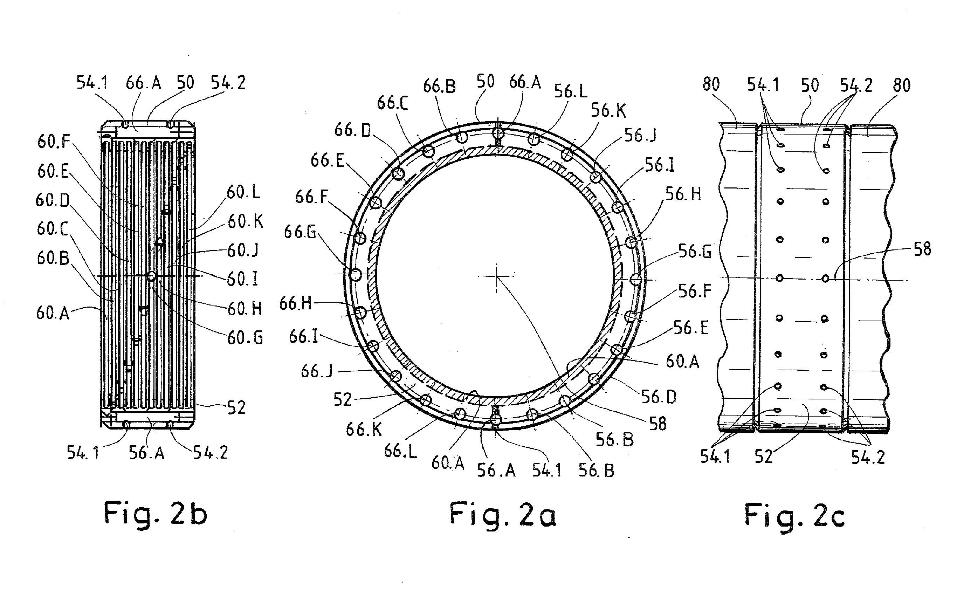

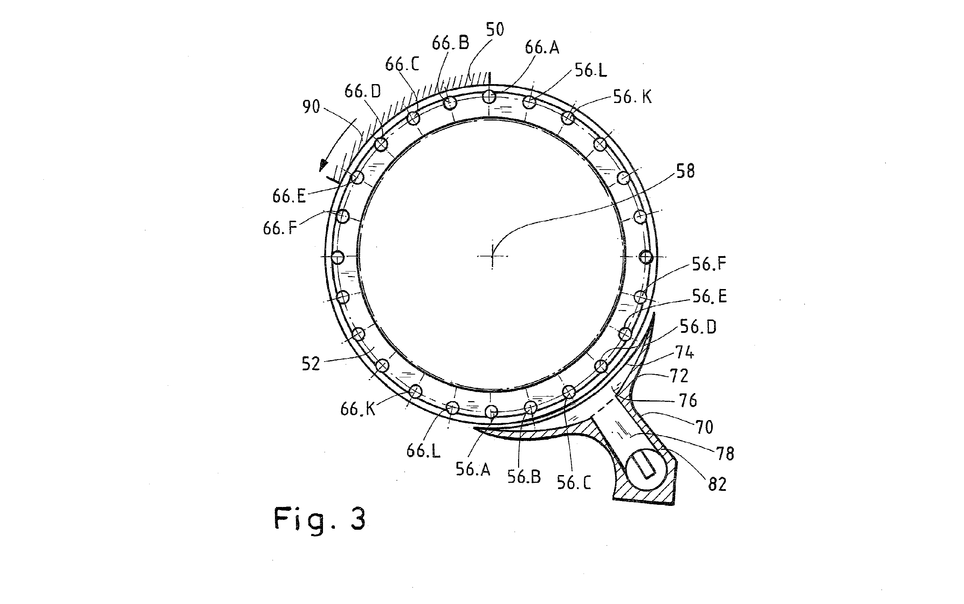

An der als Perforationstrommel ausgebildeten Fördertrommel 30 ist eine Perforationseinrichtung 40 z.B. Laser angeordnet, so dass die auf der Fördertrommel 30 queraxial geförderten Filterzigaretten mit einem Perforationsmuster bzw. mit einer Perforation versehen werden. An der Fördertrommel 30 ist ein schematisch dargestellter Saugkopf 70 (vgl. Fig. 3) angeordnet, der mit einem (hier nicht dargestellten) Saugring (vgl. Fig. 2a bis 2c, Fig. 3) der Fördertrommel 30 zusammenwirkt, um einen Saugsektor 90 (vgl. Fig. 3) an der Fördertrommel 30 im Bereich der Perforationseinrichtung 40 auszubilden.

Die perforierten Filterzigaretten werden anschließend von der Schneidtrommel 31 an eine Spreiztrommel 33 übergeben. Auf der Spreiztrommel 33 werden die Filterzigarettenpaare längsaxial voneinander beabstandet und anschließend an eine erste Prüftrommel 34 übergeben. An der Prüftrommel 34 ist ein erstes Prüforgan 44 angeordnet, welches die Filterzigaretten einer ersten Prüfung, z.B. einer Kopfendenprüfung, unterzieht.

Im Rahmen der Erfindung ist es möglich, dass die hergestellten Filterzigaretten an dem ersten Prüforgan 44 einer Dichtigkeitsprüfung und/oder einer Kopfendenprüfung und/oder einer Ventilationsprüfung unterzogen werden. Darüber hinaus ist es im Rahmen der Erfindung möglich, dass mittels des Prüforgans 44 eine optische Prüfung der Zigaretten auf der Trommel 34 durchgeführt wird.

Anschließend werden die Zigaretten von der Prüftrommel 34 an eine nachfolgende zweite Prüftrommel 35 übergeben, an der ein zweites Prüforgan 45 angeordnet ist, um die Zigaretten weiteren Qualitätsprüfungen und/oder mindestens einer der zuvor genannten an der Prüftrommel 34 nicht durchgeführten Prüfung zu unterziehen.

Fig. 2a zeigt schematisch eine Seitenansicht eines Saugrings 50, der beispielsweise an einer Perforationstrommel (vgl. Fig. 1, Bezugszeichen 30) eingesetzt bzw. verwendet wird. Fig. 2b zeigt ferner schematisch einen Querschnitt durch den Saugring 50.

In Fig. 2c ist schematisch eine Außenansicht des Saugrings 50 dargestellt, wobei der Saugring 50 an einem Trommelkörper 80 für eine Fördertrommel ausgebildet oder integriert ist. Das heißt, dass der Saugring 50 Bestandteil des Trommelkörpers 80 für eine entsprechende Fördertrommel der Tabak verarbeitenden Industrie ist.

Der Saugring 50 weist einen Ringkörper 52 auf, wobei auf der Außenseite des Ringkörpers 52 in Umfangsrichtung des Ringkörpers 52 mehrere radiale Durchlassbohrungen 54.1, 54.2 paarweise nebeneinander ausgebildet sind.

Die außenliegenden Durchlassbohrungen 54.1, 54.2 sind jeweils mit Kanalbohrungen 56.A, 56.B, 56.C, ...., 56.K, 56.L und mit den jeweils diametral gegenüber liegend angeordneten Kanalbohrungen 66.A, 66.B, 66.C, ...., 66.K, 66.L im Inneren des Ringkörpers 52 verbunden. Die Kanalbohrungen 56.A, ..., 56.L, 66.A, ..., 66.L sowie deren Mittenlängsachsen sind parallel zur Mittenachse 58 des Saugrings 50 ausgerichtet. Weiterhin sind jeweils zwei miteinander korrespondierende sowie kommunizierende Kanalbohrungen 56.A, 66.A sowie 56. B, 66. B bis 56. L, 66. L über jeweils separate kreisförmige Kanäle 60.A, 60.B bis 60.L miteinander verbunden. Die Kanäle 60.A bis 60.L sind dabei kreisförmig im Ringkörper 52 ausgebildet.

In Fig. 2a ist der im Ringkörper 52 ausgebildete Kanal 60.A für die miteinander kommunizierenden Kanalbohrungen 56.A und 66.A schematisch durch eine Schraffierung angedeutet.

Darüber hinaus sind die Kanalbohrungen 56.B, 56.C, ..., 56.K, 56.L mit den jeweils diametral gegenüber angeordneten Kanalbohrungen 66.B, 66.C, ..., 66.K, 66.L über jeweils ringförmige und parallel zueinander angeordnete Kanäle 60.B, 60.C, ..., 60.K, 60.L miteinander verbunden, wobei die Kanalbohrungen 56.A, ..., 56.L sowie die damit korrespondierenden und kommunizierenden Kanalbohrungen 66.A, ..., 66.L mit den jeweiligen Kanälen 60.A, ..., 60.L über radiale Anschlussbohrungen miteinander verbunden sind, so dass bei Beaufschlagung der außenseitigen Durchlassbohrungen 54.1, 54.2 der Kanalbohrung 56.A an der diametral gegenüberliegenden Kanalbohrung 66.A, die über den Kanal 60.A miteinander kommunizierend in Verbindung stehen, sowie den damit verbundenen Durchlassbohrungen 54.1, 54.2 für die Kanalbohrung 66.A diese mit einem Unterdruck beaufschlagt sind, so dass im Bereich dieser mit Unterdruck beaufschlagten Kanalbohrung 66.A Luft und Partikel über die Durchlassbohrungen 54.A, 54.2 für die Kanalbohrung 66.A und über den Kanal 60.A zu der Kanalbohrung 56.A und über die entsprechenden Durchlassbohrungen 54.1, 54.2 an der Kanalbohrung 56.A abgesaugt werden.

Durch die Verwendung des Saugrings 50 in einer Fördertrommel ist es möglich, Partikel beispielsweise an einer Lasertrommel bzw. Perforationstrommel abzusaugen, bei der die Abluftführung innerhalb der Fördertrommel durch die Kanäle des Saugrings verläuft, wobei am Saugring 50 ein Absaugstutzen oder eine Absaugeinrichtung für den Saugring 50 diametral am, insbesondere inneren oder äußeren Umfang, der Trommel bzw. des Saugrings positioniert ist.

In Fig. 3 ist schematisch eine Anordnung bzw. Kombination eines Saugrings 50 (vgl. Fig. 2a) mit einem als Absaugstutzen ausgebildeten Saugkopf 70 für den Saugring 50 im Querschnitt schematisch dargestellt. Der Saugkopf 70 weist einen dem Saugring 50 zugewandten Kopfbereich 72 auf, der eine nach innen gewölbte kreisförmig, konkav gebildete Formfläche 74 aufweist. Im Inneren des Saugkopfes 70 ist im Kopfbereich 72 ein sichelförmiger Hohlraum 76 ausgebildet, der mit einer Saugbohrung 78 im Inneren eines mit dem Kopfbereich 72 verbundenen Anschlussstückes 82 des Saugkopfes 70 verbunden ist.

Im Übergangsbereich des Anschlussstücks 82 zum Kopfbereich 72 weist der Saugkopf 70 auf beiden Seiten nach innen gewölbte Außenflächen auf, so dass der Saugkopf 70 mit seinem Kopfbereich 72 verbreitert gegenüber dem Anschlussstück 82 ausgebildet ist. Dadurch, dass der im Kopfbereich 72 ausgebildete Hohlraum 76 mit Unterdruck beaufschlagt wird, wird bei Rotation des Saugrings 50 um seine Mittenachse 58 an den Kanalbohrungen 56.A bis 56.E Unterdruck wirksam angelegt, wodurch aufgrund der mit den Kanalbohrungen 56.A bis 56.E jeweils kommunizierenden und diametralen Kanalbohrungen 66.A bis 66.E diese Kanalbohrungen 66.A bis 66.E mit Unterdruck beaufschlagt sind. Hierdurch wird in dem dem Saugkopf 70 gegenüberliegenden Bereich am Saugring 50 ein ortsstabiler Saugsektor 90 (schraffiert dargestellt) ausgebildet, in dem Partikel und Luft über die Durchlassbohrungen und die Kanalbohrungen 66.A bis 66.E und die Kanäle 60.A bis 60.E abgesaugt werden. Anschließend werden aufgrund der Rotation des Saugrings 50 die Kanalbohrungen 66.E bis 66.A in dem mit Unterdruck beaufschlagten Bereich des Hohlraums 76 des Saugkopfes 70 gefördert, so dass dann die Kanalbohrungen 56.E bis 56.A in dem Saugsektor 90 angeordnet sind und dadurch Partikel und Luft aus dem ortstabilen Saugsektor 90 entfernt werden.

Die Saugbohrung 78 des Saugkopfes 70 ist beispielsweise in die Vakuumerzeugung einer Maschine angeschlossen. Darüber hinaus ist der Saugkopf 70 gegenüber dem rotierenden Saugring ortsfest angeordnet. Beispielsweise ist der Saugring 50 bei einer Lasermuldentrommel im Perforationsbereich angeordnet, wodurch der Saugring 50 zwischen den sich drehenden Mulden der Lasermuldentrommel angeordnet ist und sich mit der Trommel dreht.

Dadurch, dass nach Absaugen der Partikel und Luft im Saugsektor 90 die Kanalbohrungen sowie die äußeren Durchlassbohrungen für die Kanalbohrungen in den mit Unterdruck beaufschlagten Bereich des Saugkopfes 70 gefördert werden, wird aufgrund der außenliegenden Durchlassbohrungen 54.1, 54.2 (vgl. Fig. 2c) für die Kanalbohrungen die staubbelastete Luft aus den Kanalbohrungen und den entsprechenden Kanälen eingesaugt. Aufgrund dieser Luftströmung kommt es dadurch vorteilhafterweise zu einer Selbstreinigung des Kanalsystems im Saugring 50, wodurch hohe Standzeiten einer Muldentrommel erreicht werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Belagapparat
- 11: Belagpapierstreifen
- 12: Saugwalze
- 13: Messerwalze
- 21: Zusammenstelltrommel
- 22: Fördertrommel
- 26: Rolltrommel
- 27: Rolleinrichtung
- 28: Trommel
- 29: Trommel
- 30: Fördertrommel
- 31: Schneidtrommel
- 32: Schneidmesser
- 33: Spreiztrommel
- 34: Prüftrommel
- 35: Prüftrommel
- 40: Perforationseinrichtung
- 44: Prüforgan
- 45: Prüforgan
- 50: Saugring
- 52: Ringkörper
- 54.1, 54.2: Durchlassbohrung
- 56.A bis 56.L: Kanalbohrung
- 58: Mittenachse
- 60.A bis 60. L: Kanäle
- 66.A bis 66.L: Kanalbohrung
- 70: Saugkopf
- 72: Kopfbereich
- 74: Formfläche
- 76: Hohlraum
- 78: Saugbohrung
- 80: Trommelkörper
- 82: Anschlussstück
- 90: Saugsektor
- M: Trommelanordnung (Filterstopfen)
- T: Trommelanordnung (Tabakstöcke)
- S: Saugluftanschluss
- P: Zigarettenstrangmaschine

## Patentansprüche

1. Saugring (50) für eine Fördertrommel (30) der Tabak verarbeitenden Industrie, wobei der Saugring (50) als Ringkörper (52) ausgebildet ist, im Ringkörper (52) wenigstens ein teilkreisförmiger Kanal (60.A bis 60.L) oder ein kreisförmiger Kanal (60.A bis 60.L) in Umfangsrichtung ausgebildet ist, wobei der teilkreisförmige oder kreisförmige Kanal (60.A bis 60.L) mehrere, vorzugsweise zwei, Kanalöffnungen im Ringkörper (52) aufweist, wobei die Kanalöffnungen über den teilkreisförmigen oder den kreisförmigen Kanal (60.A bis 60.L) miteinander kommunizierend verbunden sind, so dass bei Beaufschlagung einer Kanalöffnung mit Unterdruck oder mit Überdruck die mit der beaufschlagten Kanalöffnung kommunizierende Kanalöffnung des teilkreisförmigen oder kreisförmigen Kanals (60.A bis 60.L) mit Unterdruck oder Überdruck beaufschlagt ist.

2. Saugring (50) nach Anspruch 1, **dadurch gekennzeichnet, dass** im Ringkörper (52) mehrere, vorzugsweise nebeneinander und/oder parallel angeordnete, teilkreisförmige oder kreisförmige Kanäle in Umfangsrichtung ausgebildet sind, wobei die teilkreisförmigen oder kreisförmigen Kanäle (60.A bis 60.L) jeweils mehrere, vorzugsweise zwei, Kanalöffnungen im Ringkörper (52) aufweisen, wobei die Kanalöffnungen jedes Kanals (60.A bis 60.L) über den jeweiligen teilkreisförmigen oder kreisförmigen Kanal (60.A bis 60.L) miteinander kommunizierend verbunden sind, so dass bei Beaufschlagung einer Kanalöffnung eines Kanals (60.A bis 60.L) mit Unterdruck oder mit Überdruck die mit der beaufschlagten Kanalöffnung des entsprechenden Kanals (60.A bis 60.L) kommunizierende Kanalöffnung des jeweiligen teilkreisförmigen oder kreisförmigen Kanals (60.A bis 60.L) mit Unterdruck oder mit Überdruck beaufschlagt ist.

3. Saugring (50) nach Anspruch 1 oder 2, **dadurch gekennzeichnet, dass** die Kanäle (60.A bis 60.L) in Kanalbohrungen (56.A bis 56.L; 66.A bis 66.L) münden, wobei insbesondere die Kanalbohrungen (56.A bis 56.L; 66.A bis 66.L) parallel zur Mittenachse (58) des Ringkörpers (52) angeordnet sind, und wobei insbesondere die Kanalbohrungen (56.A bis 56.L; 66.A bis 66.L) über radiale Anschlussbohrungen mit dem teilkreisförmigen oder kreisförmigen Kanal (60.A bis 60.L) verbunden sind.

4. Saugring (50) nach Anspruch 3, **dadurch gekennzeichnet, dass** die Kanalbohrungen (56.A bis 56.L; 66.A bis 66.L) mit der äußeren Mantelfläche des Ringkörpers (52) und/oder mit der inneren Mantelfläche des Ringkörpers (52) jeweils über radiale Durchlassbohrungen (54.1, 54.2) verbunden sind.

5. Saugring (50) nach einem der Ansprüche 1 bis 4, **dadurch gekennzeichnet, dass** die kommunizierenden Kanalöffnungen eines Kanals (60.A bis 60.L) jeweils diametral am Ringkörper (52) ausgebildet sind.

6. Saugring (50) nach einem der Ansprüche 1 bis 5, **dadurch gekennzeichnet, dass** die Anschlussbohrungen zwischen den nebeneinander angeordneten teilkreisförmigen Kanälen (60.A bis 60.L) und den jeweiligen Kanalbohrungen (56.A bis 56.L; 66.A bis 66.L) um einen vorbestimmten Winkel bezogen auf die Mittenachse des Ringkörpers (52) versetzt angeordnet sind und/oder dass der Saugring (50) an oder in einer Fördertrommel (30) der Tabak verarbeitenden Industrie angeordnet ist, wobei insbesondere die Fördertrommel (30) als Prüftrommel oder Spreiztrommel oder als Perforationstrommel ausgebildet ist.

7. Saugkopf (70) für einen Saugring (50) einer Fördertrommel (30) der Tabak verarbeitenden Industrie nach einem der Ansprüche 1 bis 6, wobei der Saugkopf (70) eine konkave teilkreisförmige Formfläche (74) aufweist, wobei die Formfläche (74) an die gekrümmte Außenseite des Saugrings (50) angepasst ist, wobei der Saugkopf (70) wenigstens eine an der Formfläche (74) endende Bohrung (78), insbesondere Saugbohrung (78), aufweist, so dass bei Beaufschlagung der wenigstens einen Bohrung (78) des Saugkopfes (70) mit Unterdruck im Zusammenwirken mit den gegenüber der Formfläche (74) des Saugkopfes (70) angeordneten Kanalöffnungen des Saugrings (50) ein Unterdruck an den mit den beaufschlagten Kanalöffnungen über einen Kanal (60.A bis 60.L) des Saugrings (50) kommunizierenden Kanalöffnungen des teilkreisförmigen oder kreisförmigen Kanals (60.A bis 60.L) mit Unterdruck beaufschlagbar ist.

8. Saugkopf (70) nach Anspruch 7, **dadurch gekennzeichnet, dass** der Saugkopf (70) im Bereich der konkaven teilkreisförmigen Formfläche (74) einen verbreiterten Kopfbereich (72) aufweist und auf der der teilkreisförmigen Formfläche (74) abgewandten Seite einen, insbesondere sich in einem Übergangsbereich verjüngenden, Anschlusskörper (82) aufweist, wobei insbesondere im Übergangsbereich der Anschlusskörper (82) wenigstens eine konkave Außenseite und/oder eine polygonartige Einbuchtung in der Außenseite aufweist.

9. Anordnung eines Saugrings (50) nach einem der Ansprüche 1 bis 7 mit einem Saugkopf (70) für den Saugring (50), wobei der Saugkopf (70) benachbart zum Ringkörper (52) des Saugrings (50), insbesondere separat, ortsfest angeordnet ist und gehaltert ist, wobei insbesondere der Abstand zwischen der teilkreisförmigen Formfläche (74) und der der teilkreisförmigen Formfläche (74) zugewandten Oberfläche des Saugrings (50) weniger als 2 mm, vorzugsweise weniger als 0,2 mm, aufweist.

10. Anordnung nach Anspruch 9, **dadurch gekennzeichnet, dass** der Saugkopf (70) eine dem Inneren des Ringkörpers (52) zugeordnete konvexe teilkreisförmige Formfläche (74) aufweist, wobei der Saugkopf (70) radial beabstandet zum Ringkörper (52), insbesondere separat, gehaltert ist, wobei der Abstand zwischen der teilkreisförmigen Formfläche (74) und der der teilkreisförmigen Formfläche (74) zugewandten Oberfläche des Saugrings (50) weniger als 2 mm, vorzugsweise weniger als 0,2 mm, aufweist
oder dass der Saugkopf (70) eine an der Außenseite des Ringkörpers (52) zugeordnete konkave teilkreisförmige Formfläche (74) aufweist, wobei der Saugkopf (70) radial beabstandet zur Außenseite des Ringkörpers (52), insbesondere separat, gehaltert ist.

11. Anordnung nach Anspruch 9 oder 10, **dadurch gekennzeichnet, dass** die Breite des Saugkopfes (70) der Breite des Ringkörpers (52) entspricht und/oder dass der Saugkopf (70) wenigstens einen oder mehrere, vorzugsweise als Bohrungen ausgebildete, Ansaugkanäle (78, 76) aufweist, die mit Unterdruck beaufschlagbar sind.

12. Verfahren zum Betreiben einer Fördertrommel der Tabak verarbeitenden Industrie, wobei die Fördertrommel einen Saugring (50) nach einem der Ansprüche 1 bis 6 aufweist, wobei die Fördertrommel rotierend angetrieben wird, **dadurch gekennzeichnet, dass** die Kanalöffnungen am Ringkörper (52) des Saugrings (50) in einem Rotationsbereich des Ringkörpers (52) mit einer Unterdruckquelle verbunden werden, wobei unter Rotation des Ringkörpers (52) die im Rotationsbereich geförderten Kanalöffnungen mit Unterdruck beaufschlagt werden, so dass die mit den Kanalöffnungen korrespondierenden Kanalöffnungen des oder der Kanäle (60.A bis 60.L) im Ringkörper (52) außerhalb des Rotationsbereiches in einem Fördersektor des Saugrings (50) mit Unterdruck beaufschlagt sind.

13. Verfahren nach Anspruch 12, **dadurch gekennzeichnet, dass** die miteinander kommunizierenden Kanalöffnungen der jeweiligen Kanäle (60.A bis 60.L) des Ringkörpers (52) im Wechsel im Rotationsbereich mit der Unterdruckquelle verbunden werden.

14. Fördertrommel der Tabak verarbeitenden Industrie, insbesondere Perforationstrommel, mit einem Saugring (50) nach einem der Ansprüche 1 bis 6 oder mit einer Anordnung nach einem der Ansprüche 9 bis 11.

15. Maschine der Tabak verarbeitenden Industrie, insbesondere Filteransetzmaschine, mit einem Saugring (50) nach einem der Ansprüche 1 bis 6 oder mit einer Fördertrommel nach Anspruch 14.
